# EUROPÄISCHE PATENTSCHRIFT

(11) **EP 3 253 927 B1**
(45) Veröffentlichungstag und Bekanntmachung des Hinweises auf die Patenterteilung: **27.07.2022**
(21) Anmeldenummer: 15787504.8
(22) Anmeldetag: 19.10.2015
(51) Int. Cl.: E02B 17/00, E02B 17/02, E02D 27/42, E02D 27/52

(54) **OFFSHORE-GRÜNDUNGSSTRUKTUR MIT GANGWAY UND VERBESSERTEM BOATLANDING**
OFFSHORE FOUNDATION STRUCTURE WITH GANGWAY AND IMPROVED BOAT LANDING
STRUCTURE DE FONDATION EN MER POURVUE D'UNE GALERIE ET D'UN SYSTÈME D'ACCOSTAGE AMÉLIORÉ

(30) Priorität: 06.02.2015 DE 202015000876 U; 25.06.2015 DE 202015103351 U
(43) Veröffentlichungstag der Anmeldung: 13.12.2017
(73) Patentinhaber: ThyssenKrupp Steel Europe AG, 47166 Duisburg (DE)
(72) Erfinder: REALES BERTOMEO, Emilio, 27753 Delmenhorst (DE)
(74) Vertreter: Eisenführ Speiser
(86) Internationale Anmeldenummer: PCT/EP2015/074100
(87) Internationale Veröffentlichungsnummer: WO 2016/124263

(56) Entgegenhaltungen:
- EP-A1- 2 690 221
- WO-A2-2012/167015
- DE-A1- 10 315 135
- DE-A1-102010 035 025
- DE-U1-202011 101 599
- DE-U1-202011 101 599
- DE-U1-202012 005 538
- US-A1- 2006 104 821
- US-A1- 2014 147 272
- US-A1- 2014 328 632

## Beschreibung

Die Erfindung betrifft eine Offshore-Gründungstruktur mit einem Jacketabschnitt, welcher mehrere fachwerkartig miteinander verbundene Streben aufweist, und einer Aufnahme für einen Turmschaft, insbesondere für einen Turmschaft einer Windenergieanlage.

Derartige auf einer Jacket-Konstruktion beruhende Gründungstrukturen kommen insbesondere bei der Installation von Windenergieanlagen in Offshore-Regionen mit großer Gewässertiefe zum Einsatz. Die Jacket-Konstruktion weist gegenüber üblichen Monopile-Konstruktionen eine erhöhte Wasserdurchlässigkeit auf, sodass die von der Gewässerströmung verursachten Belastungen auf die Offshore-Gründungsstruktur reduziert sind.

Ferner hat sich bereits gezeigt, dass die Installation von Jacket-basierten Offshore-Gründungstrukturen wesentlich emissionsärmer durchgeführt werden kann. Jacket-Konstruktionen erlauben die Verankerung am Gewässergrund mit einer Mehrzahl von Rammpfählen. Das Eintreiben von mehreren kleinen Rammpfählen in den Gewässergrund kann dabei wesentlich emissionsärmer durchgeführt werden als das Eintreiben großer Monopile-Verankerungen.

Aufgrund ständig größer werdender Windenergieanlagen steigen ebenfalls die an die Offshore-Gründungsstrukturen gestellten Anforderungen bezüglich deren Tragfähigkeit. Ferner werden durch den Turm der Windenergieanlage ebenfalls erhebliche dynamische Kräfte in die Offshore-Gründungstruktur eingeleitet, welche diese gegenüber dem Gewässergrund abstützen muss. Um Windenergieanlagen in Offshore-Revieren mit hohen Windstärken einsetzen zu können, besteht ebenfalls regelmäßig ein Bedarf an Gründungsstrukturen mit erhöhter Tragfähigkeit.

WO 2012/167015 A2 offenbart eine hybride Offshore Wind-Wellen-Kraftanlage mit einer Gründungsstruktur, die als Jacketabschnitt ausgeführt sein kann.

Darüber hinaus offenbart DE 103 15 135 A1 eine Offshore-Anlage mit einer als Unterwasserstation ausgebildeten Andockstation, wobei die Andockstation einen direkten Zugang vom angedockten Unterwasserboot zum Aufstiegsschacht des Anlagenmastes ermöglicht.

Ferner offenbart US 2014/0328632 A1 einen Jacketabschnitt für eine Offshore-Struktur. Die Offshore-Struktur weist eine Gangway auf, die den Zugang zu einem Deck und einem Turm einer Windenergieanlage von einem Schiff ermöglicht.

US 2006/0104821 A1 offenbart eine pfahlbasierte Stützstruktur zum Stützen einer Windkraftturbine. Beine der Stützstruktur sind in einer Tipi-Zelt-Konfiguration angeordnet, um von Wellen verursachte Seitenkräfte auf die Stützstruktur zu reduzieren.

US 2014/147272 A1 betrifft ein Verfahren und eine Windturbinenkonstruktion zum Warten einer Windturbine über einen unteren Abschnitt des Windturbinenturms. Ein Übergangsabschnitt ist an dem unteren Abschnitt des Windturbinenturms angeordnet, bildet eine Montageschnittstelle und wird von einer Arbeitsplattform einer Gründungsstruktur getragen.

Eine weitere derartige Offshore-Gründungsstruktur ist beispielsweise aus DE 20 2011 101 599 U1 des hiesigen Erfinders bekannt. Ist eine derartige Offshore-Gründungsstruktur im Meerboden verankert und ist an dieser eine Windenergieanlage befestigt, kann es erforderlich sein, diese zu warten. Zur Wartung der Windenergieanlage werden Monteure mittels eines Boots an eine Landungsstruktur verbracht, ein sogenanntes Boatlanding, und von dieser aus müssen die Monteure über eine im Wesentlichen senkrecht nach oben führende Leiter bis zu 22 Meter nach oben klettern, um auf die Arbeitsplattform, die sogenannte Working-Platform, die sich an der Schnittstelle, dem sogenannten Transitionpiece, erstreckt, zu gelangen. Üblicherweise ist etwa auf der Hälfte der Leiter eine kleine Erholungsplattform ausgebildet, sodass die Monteure nicht den gesamten Weg in einem Stück erklimmen müssen, sondern sich zwischendurch ausruhen können. Dennoch ist das Aufsteigen sehr kräfteraubend und führt insbesondere bei älteren oder ungeübten Arbeitern zu großen körperlichen Problemen. Zudem ist das Klettern auf hoher See sehr gefährlich, auch da der Monteur während dem Erklimmen der Leiter ständig Wind und Wasser ausgesetzt ist.

Es wurde daher bereits schon vorgeschlagen, die Leiter durch einen Fahrstuhl zu ersetzen, der direkt vom Boatlanding bis zur Working-Platform fährt. Hierdurch können zwar die körperlichen Strapazen vermieden werden, welche beim Erklettern der 22 Meter langen Leiter auftreten, allerdings ist ein Fahrstuhl kostenintensiver und störungsanfällig. Ferner ist es üblicherweise bei solchen Offshore-Tragstrukturen notwendig, mehr als eine Leiter oder einen Fahrstuhl vorzusehen, sodass abhängig von den Witterungsbedingungen die Tragstruktur von verschiedenen Seiten mit dem Boot angefahren werden kann.

Es ist folglich Aufgabe der vorliegenden Erfindung eine Vorrichtung anzugeben, insbesondere eine Offshore-Tragstruktur, bei der das Verbringen von Montage-Personal von einem Boot auf die Working-Platform vereinfacht ist und sicherer.

Die Aufgabe wird gelöst durch eine Offshore-Gründungsstruktur mit den Merkmalen der unabhängigen Ansprüche. Vorteilhafte Weiterbildungen sind Gegenstand der Unteransprüche.

Demnach wird die Aufgabe gelöst durch eine Offshore-Gründungsstruktur mit einem Jacketabschnitt, welcher mehrere fachwerkartig miteinander verbundene Streben aufweist, eine Aufnahme für einen Turmschaft, insbesondere für einen Turmschaft einer Windenergieanlage und mit einer Plattform, die wenigstens teilweise im Inneren des Jacketabschnitts angeordnet ist und im Wesentlichen den gesamten lichten Querschnitt des Jacketabschnitts verschließt. Die Plattform ist vorzugsweise unterhalb der Aufnahme angeordnet. Die Plattform ist vorzugsweise etwa 5 bis 20 Meter unterhalb der Aufnahme angeordnet, vorzugsweise 10 bis 15 Meter. Ferner ist vorzugsweise eine Anlege-Vorrichtung oder Landungs- bzw. Landungsstruktur bzw. Boatlanding vorgesehen. Die Anlegestruktur erstreckt sich vorzugsweise außerhalb der Jacket-Struktur an dieser entlang und weist eine Leiter oder dergleichen auf. Die Leiter der Landungsstruktur bzw. der Anlege-Vorrichtung erstreckt sich vorzugsweise etwa von der Höhe der Plattform weiter nach unten, vorzugsweise 5 bis 15 Meter. Am unteren Ende der Leiter kann so ein Boot anlegen und ein Monteur kann über die Leiter auf die Plattform klettern. Dadurch ist die gesamte Kletterlänge wesentlich verringert und ein Monteur kann sich auf der Plattform ausruhen. Er ist dabei im Inneren der Jacket-Struktur, und daher vor Wellen und Wind wenigstens teilweise geschützt. Es ist bevorzugt, dass die Anlegestruktur eine Leiter aufweist und keinen Lift. Weist diese einen Lift auf, ist zwar das Ersteigen der Plattform einfacher, allerdings besteht die Gefahr, dass beim Anlanden des Boots der Lift beschädigt wird. Daher werden Lifte, die direkt an der Anlege-Vorrichtung vorgesehen sind, von Monteuren weniger bevorzugt, da hier stets die Gefahr besteht diese bei Wellengang zu beschädigen und so Haftungsfälle nach sich zu ziehen.

Vorzugsweise oder alternativ ist eine Gangway vorgesehen, die sich bevorzugt im Inneren des Jacketabschnitts erstreckt. Ein Jacketabschnitt hat vorzugsweise eine zylindrische oder kegelstumpfförmige Grundform, wobei an der Außenkontur vorzugsweise vier-, fünf-, sechs-, sieben- oder achteckig ist. Der Jacketabschnitt besteht vorzugsweise aus mehreren Streben, die teilweise ring- oder polygonförmig um eine Zentralachse verlaufen und Ringe bilden. Die restlichen Streben verbinden derartige Ringe oder Polygone miteinander, beispielsweise mittels x-Knoten oder anderen Knoten. Die Gangway erstreckt sich vorzugsweise radial bezogen auf einen Jacketabschnitt von außen nach innen, sodass ein Monteur geschützt von außerhalb des Jacketabschnitts nach innen gelangen kann. Die Gangway ist vorzugsweise als Steg mit Geländern, Durchgang, Tunnel, eingehauster Durchgang, Hängebrücke, oder dergleichen ausgebildet. Die Gangway ist vorzugsweise zusätzlich oder alternativ zu der Plattform vorgesehen. In einer Variante ist die Plattform klein ausgebildet und weist eine im Wesentlichen rechteckige Grundstruktur auf, befindet sich etwa mittig innerhalb des Jacketabschnitts. Die Gangway verbindet die Plattform mit einer Außenseite des Jacketabschnitts. Die Gangway ist dabei so angeordnet, dass ein Monteur von der Leiter der Anlege-Vorrichtung ohne Weiteres direkt in die Gangway gelangen kann. Die Gangway verbindet folglich die Plattform mit der Leiter. Alternativ ist die Gangway auf der Plattform vorgesehen. Bevorzugt ist eine Offshore-Gründungsstruktur mit einem Jacketabschnitt vorgesehen, welcher mehrere fachwerkartig miteinander verbundene Streben aufweist, eine Aufnahme für einen Turmschaft, insbesondere für einen Turmschaft einer Windenergieanlage und die einen Lift aufweist. Der Lift ist vorzugsweise unterhalb des Turmschafts derart angeordnet, dass ein Monteur von einer unterhalb des Turmschafts angeordneten Plattform mittels des Lifts in das Innere des Turmschafts verfahren kann. Alternativ ist der Lift so angeordnet, dass ein Monteur von einer unterhalb des Turmschafts angeordneten Plattform direkt auf eine Service-Plattform, die den Turmschaft im unteren Bereich umgibt, verfahren kann. Wird direkt in das Turminnere verfahren, hat dies den Vorteil, dass beim Ausstieg aus dem Lift der Monteur vor Wind und Wetter geschützt ist. Hierdurch ist die Sicherheit beim Arbeiten wesentlich verbessert. Zu Sicherstellung der Erreichbarkeit von Plattform und Turmschaft ist vorzugsweise neben dem Lift eine sich zum Turmschaft hin erstreckende Leiter angeordnet. Die entsprechende Eintrittsöffnung in einem Boden des Turmschafts und/oder einer entsprechenden Aufnahme für einen Turmschaft ist bevorzugt durch eine nach innen aufklappbare Luke verschließbar. Im Falle eines Ausfalls des Lifts ist somit eine alternative Möglichkeit vorhanden, den Turmschaft zu betreten oder zu verlassen. Insbesondere durch die Kombination der oben genannten Merkmale, nämlich eine Plattform im Inneren des Jacketabschnitts, die Anlegevorrichtung, sowie den Lift und die Gangway, werden Vorteile erzielt. Ein Monteur kann mit seinem Boot an der Anlegevorrichtung anlegen, die verkürzte Leiter bis zur Plattform hochklettern, dann in die Gangway eintreten, mittels der Gangway bis zum Lift gelangen und dann mit dem Lift von der Plattform in das Turmschaftinnere fahren, wo dann vorzugsweise weitere Plattformen oder ein Raum vorgesehen ist.

Die Offshore-Gründungsstruktur und insbesondere der Jacketabschnitt ist vorzugsweise wie die Offshore-Tragstruktur und die Fachwerkstruktur gemäß dem Deutschen Gebrauchsmuster DE 20 2011 101 599 ausgebildet.

Alternativ oder zusätzlich ist die Offshore-Gründungsstruktur bzw. der Jacketabschnitt ausgebildet, wie in der Europäischen Patentanmeldung mit dem Aktenzeichen 13 177 869, Anmeldetag 24. Juli 2013.

Bevorzugt weisen die Streben des Jacketabschnitts eine Beschichtung auf, wie in dem Deutschen Gebrauchsmuster DE 20 2012 005 538 beschrieben.

Weiterhin ist bevorzugt, dass die Gründungsstruktur bzw. der Jacketabschnitt ausgebildet ist, wie in der Internationalen Veröffentlichung WO 2013/139816 A2 beschrieben.

Weitere Merkmale und Vorteile der Erfindung ergeben sich aus der nachfolgenden Beschreibung bevorzugter Ausführungsformen, unter Bezugnahme auf die Zeichnungen. Es zeigen:
Fig. 1 eine erste Ausführungsform der erfindungsgemäßen Offshore-Gründungsstruktur,
Fig. 2 eine zweite Ausführungsform der erfindungsgemäßen Offshore-Gründungsstruktur,
Fig. 3 eine Detailansicht aus Fig. 2,
Fig. 4 eine weitere Detailansicht aus Fig. 2 in einer Perspektive,
Fig. 5 eine teilweise ausgeschnittene Detailansicht eines Bodens der Turmaufnahme, und
Fig. 6 einen teilweisen Schnitt durch die Turmaufnahme.

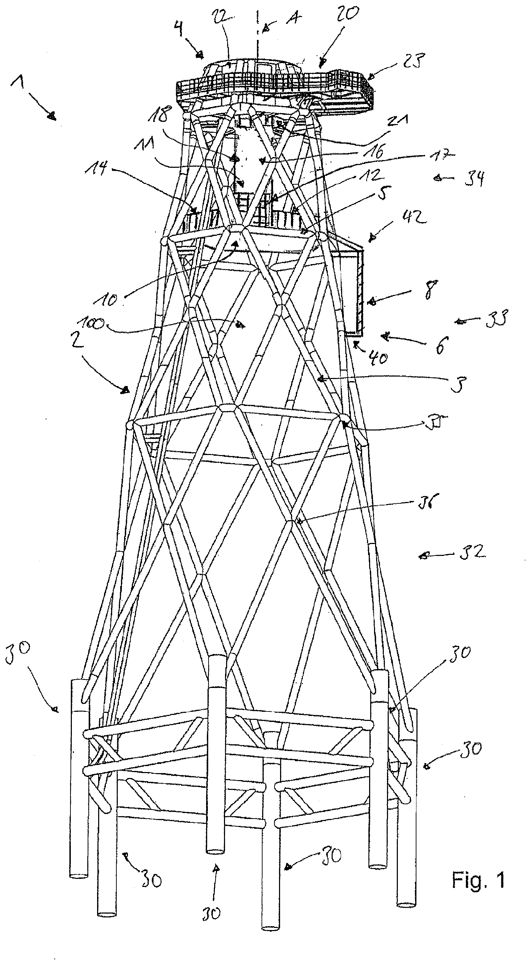

Gemäß Fig. 1 weist die erfindungsgemäße Offshore-Gründungsstruktur 1 einen Jacketabschnitt 2 auf, welcher mehrere fachwerkartig miteinander verbundene Streben umfasst. Innerhalb des Jacketabschnitts 2 der Offshore-Gründungsstruktur 1 ist eine Aufnahme 4 für einen Turmschaft 22einer Windenergieanlage angeordnet. Die Aufnahme 4 weist eine Ausnehmung (verdeckt) auf, welche sich entlang einer im Wesentlichen vertikalen Längsachse A erstreckt und zylindrisch ausgebildet ist. Die Ausnehmung der Aufnahme 4 ermöglicht es, dass der Turmschaft 22teilweise innerhalb des Jacketabschnitts 2 angeordnet ist.

Auf dem Jacketabschnitt 2 ist eine Service-Plattform 20 angeordnet. Die Service-Plattform 20 weist eine kreisförmige Ausnehmung 21 auf, durch welche sich der Turmschaft 22 erstreckt. Ferner ist an den außenseitigen Kanten der Service-Plattform 20 ein Geländer 23 befestigt, welches vollständig um die Service-Plattform 20 umläuft.

Die Offshore-Gründungsstruktur 1 für Windenergieanlagen (WEA) weist gemäß Figur 1 sechs im Meeresgrund verankerbare Pfähle 30 auf. Mit den Pfählen 30 ist der Jacketabschnitt 2 verbunden. Die Jacketabschnitt 2 ist im Wesentlichen konisch oder kegelstumpfförmig ausgebildet und hat einen im Wesentlichen sechseckigen Querschnitt bezogen auf eine Längsachse A der Jacketabschnitt 2. Er ist mit ihren sechs unteren Ecken mit den sechs Pfählen 30 verbunden. Der Jacketabschnitt 2 weist drei Segmente 32, 33, 34 auf, die übereinander im Wesentlichen koaxial zueinander angeordnet sind.

Der Jacketabschnitt 2, umfassend die Segmente 32, 33, 34 ist aus Rohren bzw. Streben 3, 5 (nur jeweils eine mit Bezugszeichen versehen) gebildet, welche mittels Knoten 35, 36 (jeweils nur zwei mit Bezugszeichen versehen) miteinander verbunden sind. Der Knoten 35 ist als sogenannter abgerundeter Knoten bzw. "Roundet Node" ausgebildet; für Details zu diesem Knoten wird insbesondere auf WO 2013/139816 A2 verwiesen, in der diese Knoten im Detail beschrieben sind.

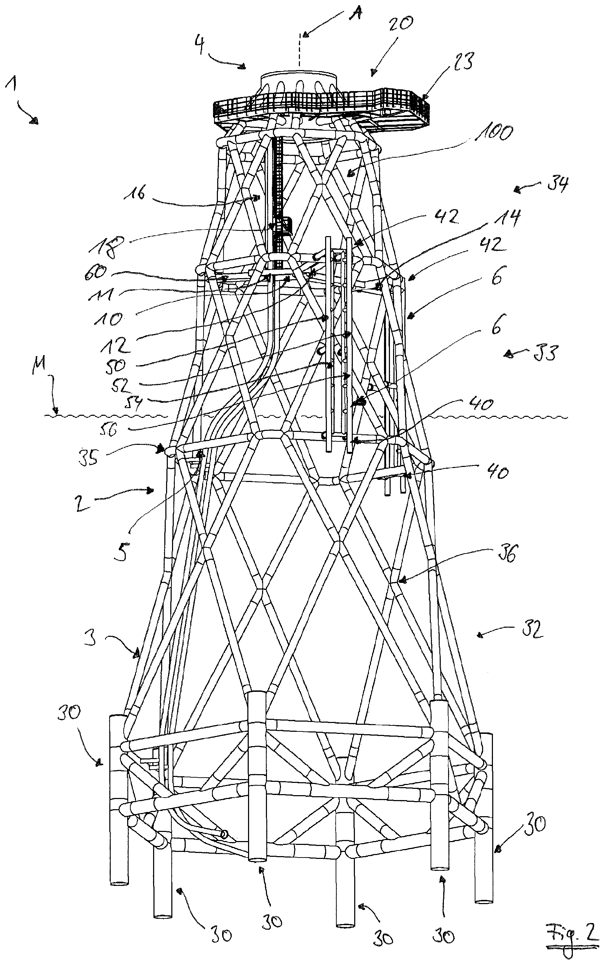

In dem mittleren Segment 33 ist die Anlegevorrichtung 6 ausgebildet. Diese ist in einem unteren Abschnitt 40 fest mit im Wesentlichen vertikal verlaufenden Streben 3 verbunden, sodass hier ein Boot anlanden kann. Der untere Abschnitt 40 ist vorzugsweise etwas niedriger als der durchschnittliche Meeresspiegel (vgl. Fig. 2) in diesem Bereich angeordnet, sodass dieser stets mit einem Boot erreichbar ist. Darüber erstreckt sich eine Leiter 8, die bis zu einem oberen Abschnitt 42 der Anlegevorrichtung 6 reicht. Hier ist die Anlegevorrichtung wiederum fest mit dem Jacketabschnitt 2 verbunden. Vorzugsweise ist in diesem oberen Bereich 42 eine Umhausung, ein Geländer oder dergleichen vorgesehen, sodass ein Mitarbeiter von Servicepersonal einfach in das Innere 100 des Jacketabschnitts gelangen kann. In dem inneren lichten Querschnitt im Inneren 100 des Jacketabschnitts auf dem Übergang zwischen dem Segment 33 und dem Segment 34 ist die Plattform 10 vorgesehen. Diese ist gemäß diesem Ausführungsbeispiel im Wesentlichen als kreisförmige Scheibe ausgebildet, beispielsweise aus einem Stahlblech. Die Plattform 10 ist in diesem Ausführungsbeispiel mit zwei Gangways 12, 14 verbunden, die sich von der Plattform 10 bis an die Mantelfläche des Jacketabschnitts 2 erstrecken, wobei gemäß diesem Ausführungsbeispiel beispielhaft nur die Gangway 12 mit einer Anlegevorrichtung 6 versehen ist. Ebenso ist üblicherweise für die Gangway 14 eine Anlegevorrichtung vorgesehen, die in dieser Figur der Einfachheit halber nicht gezeigt ist. Es soll verstanden werden, dass es ebenso bevorzugt ist drei oder mehr Gangways zwischen der Plattform 10 und einem Außenbereich des Jacketabschnitts vorzusehen. So ist es möglich, wetterabhängig die Offshore-Gründungsstruktur 1 von zwei Seiten (mit Bezug auf Figur 1 von rechts und links) mit einem Boot anzufahren. Durch beide Gangways 12, 14 gelangt ein Servicemitarbeiter in das Zentrum 11 der Plattform 10. Die Gangways 12, 14 sind gemäß diesem Ausführungsbeispiel als Durchgänge mit Geländer ausgebildet und bestehen im Wesentlichen aus einer Bodenplatte, die beispielsweise aus Stahlblech gebildet ist, sowie seitlichen Geländern, die Schutz für den Servicemitarbeiter und an dem vorzugsweise Sicherungselemente angeordnet sind, so dass ein Servicemitarbeiter seinen Sicherheitsgurt an dem Geländer einhaken kann. Durch die Gangways 12, 14 gelangt der Servicemitarbeiter zum Zentrum 11 der Plattform. Im Zentrum der Plattform ist eine Aufstiegseinrichtung 16 in Form eines Lifts 18 vorgesehen, der einen Liftkorb 17 aufweist. Dieser Liftkorb 17 ist von beiden Gangways 12, 14 zugänglich. Der Lift 18 ist vertikal unterhalb des Turmabschnitts 22 angeordnet und kann entlang der Längsachse A koaxial in diesen hinein verfahren.

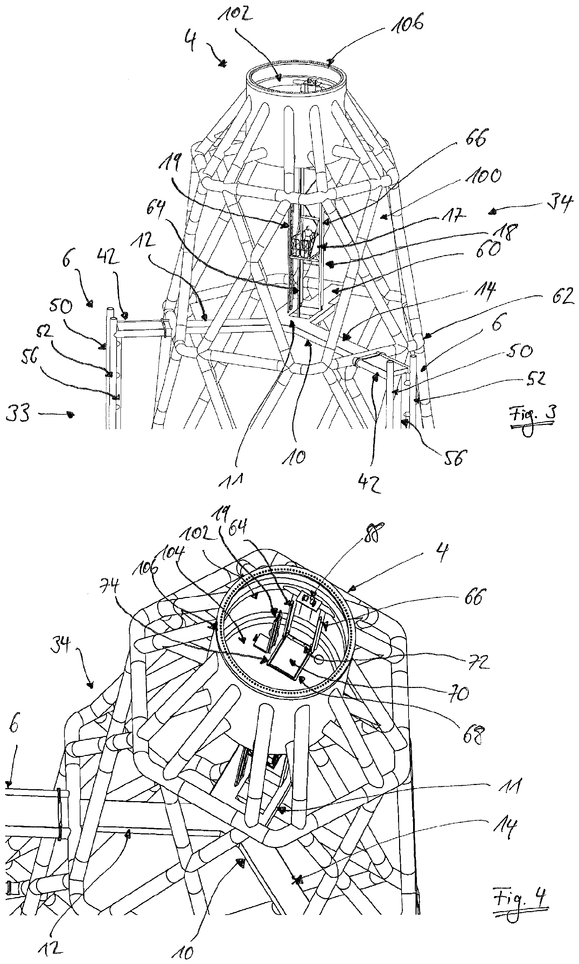

Im Inneren des Turmabschnitts 22 ist dann beispielsweise eine Plattform oder ein Raum oder dergleichen vorgesehen, so dass sich der Servicemitarbeiter umziehen kann und dann seine Arbeit im Inneren des Turms beginnen kann. Diese wird mit Bezug auf die Figuren 3 bis 6 noch genauer beschrieben werden. Üblicherweise gelangt der Servicemitarbeiter auch vom Inneren des Turms bis in die Gondel, in der Getriebe und Motoren oder dergleichen der Windenergieanlage angeordnet sind. Vorzugsweise ist in dem Turmabschnitt 22 ferner eine Tür vorgesehen, so dass der Mitarbeiter auf die Serviceplattform 20 gelangen kann.

Hierdurch ist die Arbeit an der Windenergieanlage wesentlich vereinfacht und die Sicherheit erhöht. Es sind vorzugsweise zwei oder mehr Anlegevorrichtungen 6 vorgesehen, die jeweils mit einer Gangway 12, 14 verbunden sind. An diesen Anlegevorrichtungen 6 kann ein Boot problemlos anlegen, ohne die Gefahr, sensible Teile der Windenergieanlage oder der Gründungsstruktur zu beschädigen. Der Servicemitarbeiter muss nur eine kurze Leiter 8 hochklettern, bis zur Plattform 10. Diese Plattform ist ein gutes Stück unterhalb des Turmabschnitts 22 angeordnet, vorzugsweise etwa 5 bis 15 m. Dort kann der Servicemitarbeiter sich kurz ausruhen und dann über die Gangway in den Liftkorb 17 des Lifts 18 einsteigen und unmittelbar ins Innere des Turms 22 fahren. Der Lift 18 ist geschützt durch die Plattform 10 und den ihn umgebenden Deckabschnitt. Hierdurch wird auch die Gefahr, dass der Lift 18 beschädigt wird wesentlich verringert. Ferner ist nur ein Lift 18 notwendig, obwohl das Anlanden von mehreren Seiten an der Offshore-Gründungsstruktur 1 möglich ist. Hierdurch sind auch die Herstellung und die Montage der Offshore-Gründungsstruktur 1 wesentlich vereinfacht und preiswert möglich.

Die Figuren 2 bis 6 erläutern ein weiteres Ausführungsbeispiel, das weitegehend mit dem ersten Ausführungsbeispiel übereinstimmt. Insofern sind gleiche und ähnliche Elemente mit denselben Bezugszeichen wie im ersten Ausführungsbeispiel bezeichnet, und es wird vollumfänglich auf die obige Beschreibung Bezug genommen. Im Folgenden wird im Wesentlichen auf die Unterschiede zum ersten Ausführungsbeispiel eingegangen.

Gemäß Figur 2 ist wiederum eine Offshore-Gründungsstruktur 1 mit einem Jacketabschnitt 2 dargestellt. In dem Übergangsbereich zwischen den Segmenten 33 und 34 ist eine Plattform 10 vorgesehen, die über zwei Gangways 12, 14 mit der Jacketstruktur 2 verbunden ist. An dem radial äußeren Ende der Gangways 12, 14 sind diese mit einer Anlegevorrichtung 6 verbunden. Die Anlegevorrichtung 6 erstreckt sich von dem Zwischenring zwischen den Segmenten 33 und 34 bis zu dem Zwischenring zwischen den Segmenten 32 und 33. Der Meeresspiegel M ist in Figur 2 eingezeichnet, er liegt üblicherweise im Bereich des mittleren Segments 33, sodass die Anlegevorrichtungen 6 stets mit einem Boot erreichbar sind. Die Anlegevorrichtungen 6 sind ebenso wie im ersten Ausführungsbeispiel am unteren Abschnitt 40 mit der Jacketstruktur 2 gekoppelt und mit einem oberen Abschnitt 42 ebenfalls mit der Jacketstruktur 2 gekoppelt. Die Anlegevorrichtungen 6 weisen zwei im Wesentlichen parallel zueinander verlaufende Streben 50, 52 auf, an denen ein Boot befestigbar ist. Diese Streben 50, 52 sind radial bezogen auf die Achse A nach außen gerichtet. Radial innenliegend sind zwei weitere Streben 54, 56 vorgesehen, zwischen denen eine Leiter oder dergleichen vorgesehen sein kann, sodass ein Servicemitarbeiter, auch wenn ein Boot eher im unteren Bereich 40 der Anlegevorrichtung 6 anlandet, bis zum oberen Abschnitt 42 empor klettern kann.

Die Plattform 10 weist gemäß diesem Ausführungsbeispiel wiederum einen zentralen Bereich 11 auf und ist ferner mit einer Stützstrebe 60 versehen, die sich an der den Gangways 12, 14 abgewandten Seite der Plattform 10 zum Jacketabschnitt 2 hin erstreckt und so die Stabilität der Plattform erhöht (siehe insbesondere Figur 3). Wie sich auf Figur 3 ergibt, erstrecken sich die beiden Gangways 12, 14 und die Strebe 60 etwa im 120°-Winkel zueinander versetzt von dem zentralen Bereich 11 und sind jeweils mit einem Ringelement 62 der Jacketstruktur 2, welches den Übergang zwischen den Segmenten 34 und 33 bildet, verbunden. So ist eine Stabilität erhöht, aber auch eine gewisse Flexibilität der Jacketstruktur 2 beibehalten.

Die Aufstiegseinrichtung 16 weist gemäß diesem Ausführungsbeispiel sowohl einen Lift 18 als auch eine Leiter 19 auf. Beide verlaufen etwa parallel zueinander. Die Leiter 19 dient in erster Linie als Sicherheitslösung, das heißt, sie bietet einen redundanten Aufstieg in das Innere 102 der Aufnahmevorrichtung 4 bzw. des Transition Piece 4.

Der Lift 18 weist gemäß diesem Ausführungsbeispiel einen Liftkorb 17 auf, der an zwei Schienen 64, 66 fährt. Die Schienen 64, 66 erstrecken sich vom zentralen Bereich 11 der Plattform 10 bis ins Innere 102 des Transition Piece 4 (siehe Figur 4). Das Transition Piece 4 hat einen Boden 104. Am oberen Rand weist das Transition Piece 4 einen Flanschabschnitt 106 auf, an den ein Turm einer Windenergieanlage angeflanscht werden kann.

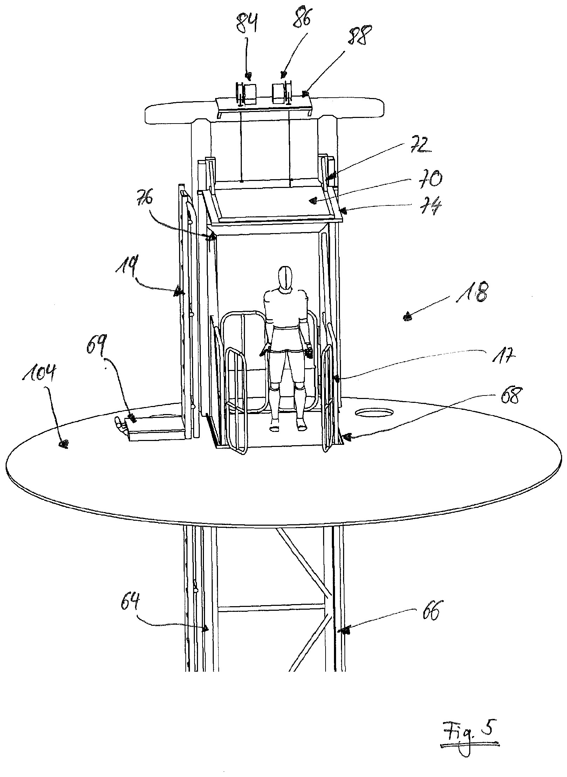

In dem Boden 104 ist eine Luke 68 vorgesehen, durch die der Liftkorb 17 hindurchfahren kann. Die Luke 68 ist durch eine Abdeckung 70 verschlossen. Die Abdeckung 70 ist über einen eigenen Liftwagen 72 mit den Schienen 64, 66 des Lifts 16 gekoppelt. Die Abdeckung 70 verhindert durch an ihrem Rand befindliche Gummiabdichtungen 74 wirksam ein Eindringen von Gischt und salzwassergesättigter Umgebungsluft aus dem Bereich unterhalb des Transition Piece 4, um die im Inneren befindlichen elektrischen oder sonstigen Anlagen gegen Korrosion oder Kurzschlüsse zu schützen. Das Gewicht der Abdeckung 70 ist vorzugsweise so bemessen, dass auch eine Windböe bei schlechterem Wetter diese nicht anheben kann. Neben der Abdeckung 70, die die Luke 68 verschließt, ist eine weitere Luke 69 samt Lukendeckel vorgesehen, die der Leiter 19 zugeordnet ist (siehe Figur 5).

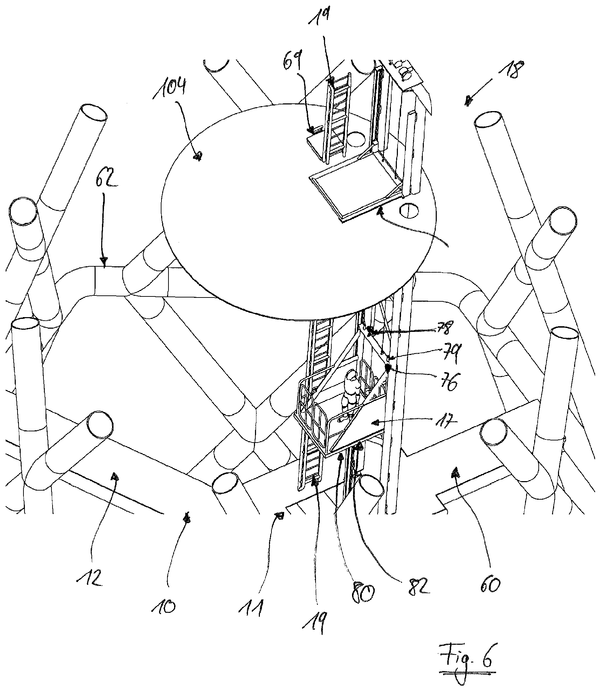

Nutzt der Servicemitarbeiter den Lift 18, wird die Abdeckung 70 gemäß diesem Ausführungsbeispiel wie folgt angehoben. In dem Moment, in dem der obere Teil 76 des Liftkorbs 17 die Abdeckung 70 erreicht, wird diese durch zwei Gummipuffer 78, 79 (vergleiche Figur 6), die an dem Liftkorb 17 befestigt sind, kontaktiert und durch den Liftkorb 17 angehoben und öffnet die Aussparung 68 im Boden 104 des Transition Piece 4. Der Liftkorb 17 ist seinerseits an seiner Unterseite 80 (siehe Figur 6) mit abdichtenden Gummileisten 82 versehen und sorgt somit für einen ausreichenden Schutz gegen das Eindringen von Luft aus dem Bereich unterhalb des Transition Piece 4, wenn der Liftkorb 17 in der in Figur 5 gezeigten Position ist. Die Abdeckung 70 fährt gemeinsam mit dem Liftkorb 17 nach oben und kommt dort am oberen Ende der Schienen 64, 66 zum Stehen. Bei der Abwärtsfahrt des Liftkorbs 17 wird die Abdeckung 70 zunächst wieder nach unten bewegt, bis sie durch das Auflegen auf die Ränder der Bodenaussparung 68 gestoppt wird und wieder eine Abdichtung herstellt.

Der Lift 18 verfügt über zwei synchronisierte Seilwinden 84, 86, vorzugsweise elektronisch synchronisiert, die auf einer Windenplattform 88 (vergleiche Figuren 4 und 5) oberhalb des oberen Endes der Schienen 64, 66 montiert sind. Diese befördern im Normalbetrieb gemeinsam den Liftkorb 17 auf und ab, können dies aber auch im Falle des Ausfalls einer der Winden einzeln durchführen. Sie sind daher redundant ausgelegt. Ein Notbremssystem am Liftkorb 17 verhindert im Falle des Reißens beider Zugseile den Absturz des Korbs 17. Der Liftkorb 17 kann, wenn er bei einer Betriebsstörung in der Mitte der Liftführung, das heißt zwischen der Plattform und dem Boden 104, etwa in einer Position wie in Figur 3 gezeigt, stehenbleiben sollte, durch die direkt in seiner Nähe angebrachte Leiter 19 verlassen werden. Die Winden 84, 86 sind dafür vorgesehen, im Notfall durch den Einsatz einer manuell lösbaren Fliehkraftbremse ein langsames Ablassen des Liftkorbs 17 zu ermöglichen.

## Patentansprüche

1. Offshore-Gründungstruktur (1) mit
einem Jacketabschnitt (2), welcher mehrere fachwerkartig miteinander verbundene Streben (3) aufweist,
einer Aufnahme (4) für einen Turmschaft, insbesondere für einen Turmschaft einer Windenergieanlage, und
**gekennzeichnet durch** eine Plattform (10), die wenigstens teilweise im Inneren des Jacketabschnitts (2) angeordnet ist, wobei die Plattform (10) im Wesentlichen den gesamten lichten Querschnitt des Jacketabschnitts (2) verschließt.

2. Offshore-Gründungstruktur nach Anspruch 1, mit einer oder mehreren Anlegevorrichtungen (6), insbesondere Steg, Service-Steg, Landungsstruktur, und/oder Boatlanding, zum Anlegen eines Boots wobei sich von der Anlegevorrichtung (6) eine Steigeinrichtung (8), insbesondere Treppe oder Leiter erstreckt.

3. Offshore-Gründungstruktur nach Anspruch 1 oder 2, wobei die Plattform (10) von der Anlegevorrichtung (6) mittels einer Steigeinrichtung (8) erreichbar ist.

4. Offshore-Gründungstruktur nach Anspruch 3, wobei die Steigeinrichtung (8) die Anlegevorrichtung (6) mit der Plattform (10) verbindet.

5. Offshore-Gründungstruktur nach einem der vorstehenden Ansprüche, wobei der Jacketabschnitt (2) Bereiche mit im Wesentlichen horizontal verlaufenden Streben (5) aufweist, und die Plattform (10) in diesem Bereich angeordnet ist.

6. Offshore-Gründungstruktur nach einem der vorstehenden Ansprüche, wobei der Jacketabschnitt (2) im Bereich der Plattform (10) wenigstens ein Wellenbrechelement aufweist.

7. Offshore-Gründungstruktur (1) nach einem der vorstehenden Ansprüche mit wenigstens einer Gangway (12, 14), wobei die Gangway die Plattform (10) der Offshore-Gründungsstruktur (1) mit einer Außenseite des Jacketabschnitts (2) verbindet.

8. Offshore-Gründungstruktur nach Anspruch 7, wobei die Gangway (12, 14) wenigstens teilweise im Inneren des Jacketabschnitts (2) angeordnet ist.

9. Offshore-Gründungstruktur nach Anspruch 7 oder 8, wobei die Gangway (12, 14) auf der Plattform (10) angeordnet ist.

10. Offshore-Gründungstruktur (1) nach einem der vorstehenden Ansprüche, wobei an der Plattform (10) eine Aufstiegseinrichtung (16) vorgesehen ist, zum Aufsteigen in das Innere des Turmschafts.

11. Offshore-Gründungstruktur nach Anspruch 10, wobei die Aufstiegseinrichtung (16) eine Leiter ist (19), die von der Plattform (10) in das Innere des Turmschafts führt, vorzugsweise in etwas auf die Höhe der Service-Plattform (20).

12. Offshore-Gründungstruktur nach einem der vorstehenden Ansprüche 10 oder 11, wobei die Aufstiegseinrichtung (16) mit der Gangway (12, 14) verbunden ist.

## Claims

1. An offshore foundation structure (1) comprising
a jacket portion (2) which has a plurality of struts (3) interconnected in a framework-like manner,
a receiving means (4) for a tower shaft, in particular for a tower shaft of a wind power installation, and
**characterised by** a platform (10) which is arranged at least partially in the interior of the jacket portion (2), wherein the platform (10) closes substantially the entire inner cross-section of the jacket portion (2).

2. The offshore foundation structure according to claim 1 comprising one or more docking arrangements (6), in particular a jetty, a service jetty, a landing structure and/or a boat landing, for docking of a boat, wherein a climbing device (8), in particular stairs or a ladder, extends from the docking arrangement (8).

3. The offshore foundation structure according to claim 1 or claim 2, wherein the platform (10) can be reached from the docking arrangement (6) by means of a climbing device (8).

4. The offshore foundation structure according to claim 3, wherein the climbing device (8) connects the docking arrangement (6) to the platform (10).

5. The offshore foundation structure according to one of the preceding claims, wherein the jacket portion (2) has regions having substantially horizontally extending struts (5), and the platform (10) is arranged in said region.

6. The offshore foundation structure according to one of the preceding claims, wherein the jacket portion (2) has at least one wave-breaking element in the region of the platform (10).

7. The offshore foundation structure according to one of the preceding claims comprising at least one gangway (12, 14), wherein the gangway connects the platform (10) of the offshore foundation structure (1) to an outside of the jacket portion (2).

8. The offshore foundation structure according to claim 7, wherein the gangway (12, 14) is arranged at least partially in the interior of the jacket portion (2).

9. The offshore foundation structure according to claim 7 or 8, wherein the gangway (12, 14) is arranged on the platform (10).

10. The offshore foundation structure (1) according to one of the preceding claims, wherein provided at the platform (10) is an ascension device (16) for climbing into the interior of the tower shaft.

11. The offshore foundation structure according to claim 10, wherein the ascension device (16) is a ladder (19) leading from the platform (10) into the interior of the tower shaft, preferably approximately to the height of the service platform (20).

12. The offshore foundation structure according to one of the preceding claims 10 or 11, wherein the ascension device (16) is connected to the gangway (12, 14).

## Revendications

1. Structure de fondation offshore (1) avec
une section de jaquette (2), qui présente plusieurs entretoises (3) reliées entre elles à la manière d'un treillis,
un logement (4) pour un mât de tour, en particulier pour un mât de tour d'une installation d'énergie éolienne, et
**caractérisée par** une plate-forme (10) qui est disposée au moins partiellement à l'intérieur de la section de jaquette (2), la plate-forme (10) fermant sensiblement la totalité de la section transversale libre de la section de jaquette (2).

2. Structure de fondation offshore selon la revendication 1, avec un ou plusieurs dispositifs d'amarrage (6), en particulier ponton, ponton de service, structure d'appontement et/ou débarcadère, pour l'accostage d'un bateau, un dispositif d'ascension (8), en particulier un escalier ou une échelle, s'étendant depuis le dispositif d'amarrage (6).

3. Structure de fondation offshore selon la revendication 1 ou 2, dans laquelle la plate-forme (10) est accessible depuis le dispositif d'amarrage (6) au moyen d'un dispositif d'ascension (8).

4. Structure de fondation offshore selon la revendication 3, dans laquelle le dispositif d'ascension (8) relie le dispositif d'amarrage (6) à la plate-forme (10).

5. Structure de fondation offshore selon l'une quelconque des revendications précédentes, dans laquelle la section de jaquette (2) comprend des zones avec des entretoises (5) s'étendant sensiblement horizontalement, et la plate-forme (10) est disposée dans cette zone.

6. Structure de fondation offshore selon l'une quelconque des revendications précédentes, dans laquelle la section de jaquette (2) comprend au moins un élément anti-vagues dans la zone de la plate-forme (10).

7. Structure de fondation offshore (1) selon l'une quelconque des revendications précédentes,
avec au moins une passerelle (12, 14), la passerelle reliant la plate-forme (10) de la structure de fondation offshore (1) à un côté extérieur de la section de jaquette (2).

8. Structure de fondation offshore selon la revendication 7, dans laquelle la passerelle (12, 14) est disposée au moins partiellement à l'intérieur de la section de jaquette (2).

9. Structure de fondation offshore selon la revendication 7 ou 8, dans laquelle la passerelle (12, 14) est disposée sur la plate-forme (10).

10. Structure de fondation offshore (1) selon l'une quelconque des revendications précédentes, dans laquelle un dispositif d'ascension (16) est prévu sur la plate-forme (10) pour permettre de monter à l'intérieur du mât de tour.

11. Structure de fondation offshore selon la revendication 10, dans laquelle le dispositif d'ascension (16) est une échelle (19) qui mène de la plate-forme (10) à l'intérieur du mât de tour, de préférence environ à la hauteur de la plate-forme de service (20).

12. Structure de fondation offshore selon l'une quelconque des revendications 10 ou 11 précédentes, dans laquelle le dispositif d'ascension (16) est relié à la passerelle (12, 14).
